# FASCICULE DE BREVET EUROPEEN

(11) **EP 2 926 697 B1**
(45) Date de publication et mention de la délivrance du brevet: **11.09.2019**
(21) Numéro de dépôt: 15161159.7
(22) Date de dépôt: 26.03.2015
(51) Int. Cl.: A47J 27/08

(54) **APPAREIL DE CUISSON D'ALIMENTS SOUS PRESSION À BAIONNETTES INVERSÉES ET MÉTHODE DE FABRICATION AFFÉRENTE**
DRUCKKOCHGERÄT ZUM KOCHEN VON LEBENSMITTELN MIT UMGEKEHRTEN BAJONETTVERSCHLÜSSEN, UND ENTSPRECHENDE HERSTELLUNGSMETHODE
APPLIANCE FOR COOKING FOOD UNDER PRESSURE WITH INVERTED BAYONETS AND RELATED MANUFACTURING METHOD

(30) Priorité: 26.03.2014 FR 1452581
(43) Date de publication de la demande: 07.10.2015
(73) Titulaire: SEB S.A., 69130 Ecully (FR)
(72) Inventeur: Colas, Thomas, Antoine, 21000 DIJON (FR); Chameroy, Eric, 21260 VERONNES (FR)
(74) Mandataire: Weber, Jean-François

(56) Documents cités:
- WO-A1-2007/043086
- DE-A1- 3 703 448
- FR-A- 1 019 516
- GB-A- 641 540

## Description

La présente invention se rapporte au domaine technique général des appareils de cuisson d'aliments sous pression, et en particulier aux appareils domestiques du genre autocuiseur, comprenant une cuve et un couvercle destiné à être rapporté et verrouillé sur la cuve de manière étanche par des moyens de verrouillage pour former une enceinte de cuisson sensiblement étanche pendant la cuisson, de tels appareils étant destinés à assurer la cuisson sous pression de vapeur des aliments contenus dans l'enceinte de cuisson.

La présente invention concerne plus particulièrement un appareil de cuisson d'aliments sous pression comportant au moins :
- une cuve circulaire et un couvercle circulaire destiné à être rapporté en appui sur la cuve pour former une enceinte de cuisson sensiblement étanche à l'aide d'un moyen d'étanchéité interposé entre la cuve et le couvercle,
- des moyens de verrouillage disposés sur la cuve et le couvercle et formant des rampes de cuve et des rampes de couvercle qui sont destinées à coopérer ensemble par mise en rotation relative de la cuve et du couvercle pour que les rampes de couvercle viennent sous les rampes de cuve afin d'assurer le verrouillage du couvercle sur la cuve.

Les appareils de cuisson d'aliments sous pression sont déjà connus et ils comprennent une cuve, généralement métallique, sur laquelle est rapporté de manière étanche, par exemple par l'intermédiaire d'un joint déformable, un couvercle, généralement métallique, de manière à constituer une enceinte de cuisson sensiblement étanche.

Le couvercle est destiné à être lié à la cuve par l'intermédiaire d'un mécanisme de verrouillage susceptible d'occuper au moins une position de verrouillage du couvercle sur la cuve et au moins une position de déverrouillage dans laquelle le couvercle peut être ôté de la cuve.

Il existe différents types de mécanismes de verrouillage bien connus dans l'art antérieur, et en particulier quatre concepts généraux de verrouillage sont utilisés pour assurer une liaison résistante entre la cuve et le couvercle pour résister à la pression régnant dans la cuve lors de la cuisson.

Ainsi, on connaît par exemple les appareils de cuisson d'aliments sous pression équipés d'un mécanisme de verrouillage dit « *à étrier* » qui comportent un étrier monté à rotation sur le couvercle et venant se verrouiller, après glissement radial du couvercle sur la cuve, dans des oeillets solidaires du bord supérieur de la cuve.

On connaît également les appareils de cuisson d'aliments sous pression équipés d'un mécanisme de verrouillage dit « *à couvercle rentrant* » le couvercle pouvant être du type ovale ou flexible de manière à pouvoir être inséré dans ou à l'intérieur de la cuve de manière à venir en appui étanche contre le rebord supérieur replié de la cuve, assurant ainsi la liaison mécanique verrouillée entre la cuve et le couvercle par l'intermédiaire d'une liaison entre les poignées de cuve et de couvercle. Le concept de couvercle rentrant avec couvercle flexible est associé à un levier et un étrier venant prendre appui sur le rebord de la cuve. Le concept de couvercle rentrant de forme ovale est lui aussi associé à un levier et à un étrier venant prendre appui sur le rebord de cuve. Le concept de couvercle rentrant de forme ovale peut également être associé à une lame ressort prenant appui en partie extrême de la poignée longue de cuve et sur bord de cuve.

On connaît également les appareils de cuisson d'aliments sous pression équipés d'un mécanisme de verrouillage dit « *à mâchoire ou à segment* » comportant des mâchoires ou des segments montés à déplacement ou coulissement radial sur le couvercle pour venir respectivement, soit enserrer le rebord supérieur de la cuve ou soit traverser des orifices de la cuve pour verrouiller l'appareil.

On connaît enfin, par exemple du document GB-641540, les appareils de cuisson d'aliments sous pression équipés d'un mécanisme de verrouillage dit « *à baïonnette »* formés de rampes de cuve et de couvercle destinées à coopérer entre elles après rotation du couvercle pour venir en contact glissant et assurer la liaison mécanique de retenue entre la cuve et le couvercle procurant le verrouillage.

Chacun des mécanismes mentionnés ci-dessus possède des avantages et désavantages reconnus et identifiés tels le poids plus ou moins élevé de l'appareil lié au mécanisme de verrouillage l'équipant, la plus ou moins bonne ergonomie de manipulation et de verrouillage ou déverrouillage, ou encore le niveau plus ou moins élevé de sécurité qu'il est susceptible de procurer, ou encore la plus ou moins grande facilité de fabrication et enfin le coût de fabrication résultant de l'addition de multiples facteurs.

Les types de mécanismes de verrouillage identifiés ci-dessus présentent également une capacité plus ou moins grande à suggérer de manière naturelle ou intuitive le fonctionnement du mécanisme de verrouillage ou déverrouillage selon des opérations de manipulation nécessaires (affordance).

L'invention se propose par conséquent de proposer un nouveau type de mécanisme de verrouillage pour appareils de cuisson d'aliments sous pression de vapeur qui présente de manière générale plus d'avantages et moins d'inconvénients que les dispositifs classiques de l'art antérieurs identifiés ci-dessus.

Les objets assignés à l'invention visent ainsi de manière générale à proposer un appareil de cuisson d'aliments sous pression comportant un nouveau mécanisme de verrouillage ou déverrouillage qui soit plus performant que les appareils classiques de l'art antérieurs mentionnés précédemment, et en particulier qui permette d'obtenir un appareil de cuisson particulièrement léger, d'un haut niveau de sécurité, de manipulation facile et présentant de bonnes propriétés d'affordance.

Un autre objet de l'invention vise à proposer un nouvel appareil de cuisson d'aliments sous pression permettant d'optimiser la quantité de matière utilisée en mettant notamment en oeuvre des épaisseurs de métal réduites sans pour autant affecter le haut niveau de sécurité.

Un autre objet de l'invention vise à proposer un nouvel appareil de cuisson d'aliments sous pression permettant de faciliter l'ergonomie de l'opération de verrouillage ou déverrouillage.

Un autre objet de l'invention vise également à proposer un nouvel appareil de cuisson d'aliments sous pression qui puisse être fabriqué de manière simple tout en étant robuste et de manipulation particulièrement facile et intuitive pour l'utilisateur.

Un autre objet de l'invention vise également à fournir un appareil de cuisson d'aliments sous pression dont les opérations de verrouillage ou déverrouillage sont particulièrement bien assimilées de manière naturelle par l'utilisateur.

Les objets assignés à l'invention visent également à proposer une nouvelle méthode de fabrication de moyens de verrouillages disposés sur la cuve et le couvercle d'un appareil de cuisson d'aliments sous pression qui soit particulièrement simple et économique à réaliser en réduisant les opérations d'assemblage.

Un autre objet de l'invention vise à proposer une nouvelle méthode de fabrication de moyens de verrouillage disposés sur la cuve et le couvercle d'un appareil de cuisson d'aliments sous pression permettant d'utiliser une méthode de fabrication éprouvée.

Les objets assignés à l'invention sont atteints à l'aide d'un appareil de cuisson d'aliments sous pression comportant au moins :
- une cuve circulaire et un couvercle circulaire destiné à être rapporté en appui sur la cuve pour former une enceinte de cuisson sensiblement étanche à l'aide d'un moyen d'étanchéité interposé entre la cuve et le couvercle,
- des moyens de verrouillage disposés sur la cuve et le couvercle et formant des rampes de cuve et des rampes de couvercle qui sont destinées à coopérer ensemble par mise en rotation relative de la cuve et du couvercle pour que les rampes de couvercle viennent sous les rampes de cuve afin d'assurer le verrouillage du couvercle sur la cuve, ledit appareil étant caractérisé en ce que :
- la cuve étant délimitée par un bord supérieur à partir duquel s'étend la paroi de la cuve, les rampes de cuve sont disposées sous ledit bord supérieur à partir d'une distance « *d1* » dudit bord supérieur,
- le couvercle est délimité par un bord extérieur d'appui se poursuivant par une ceinture cylindrique de dimension ajustée à celle de la cuve afin de pouvoir venir en contact ajusté avec la paroi de la cuve lors de la mise en place du couvercle en appui dans ou sur la cuve par son bord extérieur d'appui, les rampes de couvercle étant disposées sur ladite ceinture cylindrique à une distance « *d2* » du bord extérieur d'appui, les distances d1 et d2 étant telles qu'elles permettent de faire coopérer les rampes de cuve et les rampes de couvercle entre elles lors de la mise en place du couvercle en appui sur la cuve, les rampes de couvercle étant destinées à passer sous les rampes de cuve pour venir en appui glissant contre les rampes de cuve lors de la mise en rotation relative du couvercle à l'intérieur de la cuve assurant ainsi le verrouillage,
- le bord extérieur d'appui se poursuit par une portion rentrante formant la ceinture cylindrique, ladite portion rentrante étant de dimension ajustée mais inférieure à celle de la cuve afin de pouvoir être introduite dans la cuve de sorte que la portion rentrante vienne en contact ajusté lors de la mise en place du couvercle.

Les objets assignés à l'invention sont également atteints à l'aide d'une méthode de fabrication de moyens de verrouillage disposés sur la cuve et le couvercle d'un appareil de cuisson d'aliments sous pression, lesdites cuve et couvercle étant réalisés à partir d'un matériau métallique et les moyens de verrouillage formant des rampes de cuve et des rampes de couvercle qui sont destinées à coopérer ensemble par mise en rotation relative de la cuve et du couvercle pour que les rampes de couvercle viennent sous les rampes de cuve afin d'assurer le verrouillage du couvercle sur la cuve, caractérisé en ce que:
- lesdites rampes de cuve et les rampes de couvercle sont réalisées en surépaisseur à partir de la paroi de la cuve et/ou de l'enveloppe du couvercle par ajout de matière ou déformation de matière.

D'autres particularités et avantages de l'invention apparaîtront et ressortiront plus en détails à la lecture de la description faite ci-après, en référence aux dessins annexés, donnés à titre d'exemples illustratifs et non limitatifs, dans lesquels :
- La figure 1 illustre selon une vue en perspective schématique un exemple de réalisation d'un couvercle d'un appareil de cuisson d'aliments sous pression conforme à l'invention, le couvercle étant pourvu de rampes de couvercle.
- La figure 2 illustre selon une vue schématique en perspective, une cuve d'un appareil de cuisson d'aliments sous pression conforme à l'invention, ladite cuve étant pourvue de rampes de cuve ménagées dans sa paroi.
- La figure 3 illustre, selon une vue en coupe transversale partielle, la position du couvercle et de la cuve d'un appareil de cuisson d'aliments sous pression conforme à l'invention en position de verrouillage.
- La figure 4 illustre selon une vue générale en perspective latérale, un appareil de cuisson d'aliments sous pression conforme à l'invention avec un couvercle positionné au-dessus de la cuve en prévision d'un accostage et d'un verrouillage futur.
- La figure 5 illustre selon une vue en perspective partiellement de dessus, les positions respectives de la cuve et du couvercle d'un appareil de cuisson d'aliments sous pression conforme à l'invention illustré à la figure 4.
- La figure 6 illustre selon une vue en perspective partiellement de dessus, la position d'appui du couvercle sur la cuve d'un appareil de cuisson d'aliments sous pression conforme à l'invention, avant le verrouillage.
- La figure 7 illustre, selon une vue analogue à celle des figures 5 et 6, la position du couvercle dans sa position de verrouillage sur la cuve d'un appareil de cuisson d'aliments sous pression conforme à l'invention après rotation à partir de la position d'appui illustrée à la figure 6.

Tel qu'illustré aux figures, l'invention concerne un appareil de cuisson 1 d'aliments sous pression de vapeur, de préférence à usage domestique, conçu pour cuire des aliments en présence de vapeur, laquelle est générée par le chauffage, au sein de l'appareil et en présence des aliments, d'un liquide de cuisson par exemple un liquide aqueux.

Tel qu'illustré uniquement à titre indicatif, l'appareil de cuisson 1 comporte de manière connue une cuve 3 circulaire et un couvercle 4 circulaire destiné à être rapporté en appui sur la cuve 3 pour former une enceinte de cuisson sensiblement étanche à l'aide d'un moyen d'étanchéité 5, par exemple un joint annulaire avec ou sans lèvres, interposé entre la cuve 3 et le couvercle 4.

De cette manière, on peut réaliser une enceinte de cuisson étanche capable de monter en pression lorsqu'elle est soumise à l'influence d'une source de chauffe (embarquée ou externe) jusqu'à un niveau de pression prédéterminé permettant la cuisson sous pression des aliments. De manière connue, l'appareil de cuisson 1 conforme à l'invention est pourvu d'une ou plusieurs soupapes de régulation et/ou de sécurité (non représentée(s) aux figures) permettant d'assurer la sécurité et de maintenir la pression interne de l'enceinte au niveau de pression de fonctionnement souhaité.

Tel qu'illustré, la cuve 3 est pourvue d'un fond 6, par exemple un disque cylindrique, apte à diffuser la chaleur et à partir duquel s'élève la paroi 7 de la cuve 3 formant ainsi une paroi circulaire délimitée à son extrémité supérieure par un bord supérieur 8 également circulaire.

L'appareil comporte également un couvercle 4, de forme cylindrique et de dimensions appropriées pour pouvoir être rapportés sur la cuve 4.

De manière connue, la cuve 3 et le couvercle 4 sont réalisés à partir d'un matériau métallique, tels que l'acier inoxydable, ou encore alternativement à partir d'un matériau en aluminium, en matériau tripply, la surface interne de la cuve 3 pouvant être revêtue de matériaux céramiques, de PTFE, d'émail, de laque ou de tout autre revêtement équivalent procurant un effet anti adhésif et/ou décoratif.

De manière générale, l'appareil de cuisson d'aliments sous pression conforme à l'invention comporte également un mécanisme de verrouillage formé de moyens de verrouillage 10, 11 disposés respectivement sur la cuve 3 et le couvercle 4 et formant des rampes de cuve 10 et des rampes de couvercle 11 qui sont destinées à coopérer ensemble par mise en rotation relative de la cuve 3 et du couvercle 4 pour que les rampes de couvercle 11 viennent sous les rampes de cuve 10 afin d'assurer le verrouillage du couvercle 4 sur la cuve 3. Ainsi, les moyens de verrouillage 10, 11 permettent de maintenir le couvercle 4 sur la cuve 3 pour assurer une liaison résistante entre la cuve 3 et le couvercle 4 de l'autocuiseur afin de résister à la pression interne dans l'enceinte de cuisson résultant de la cuisson des aliments sous pression de vapeur.

Selon une combinaison de caractéristiques importantes de l'invention :
- la cuve 3 est délimitée par un bord supérieur 8 à partir duquel s'étend la paroi 7 de cuve, les rampes de cuve 10 sont disposées sous ledit bord supérieur 8 à partir d'une distance d1 dudit bord supérieur 8,
- le couvercle 4 est délimité par un bord extérieur d'appui 12 se poursuivant par une ceinture cylindrique de dimension ajustée à celle de la cuve 3 afin de pouvoir venir en contact ajusté avec la paroi 7 de la cuve lors de la mise en place du couvercle 4 en appui dans ou sur la cuve 3 par son bord extérieur d'appui 12,, les rampes 11 du couvercle 4 étant disposées sur ladite ceinture cylindrique 14 à une distance d2 du bord extérieur d'appui 12, les distances d1 et d2 étant telles qu'elles permettent de faire coopérer les rampes de cuve 10 et les rampes de couvercle 11 entre elles lors de la mise en place du couvercle 4 en appui sur la cuve 3, les rampes de couvercle 11 étant destinées à passer sous les rampes de cuve 10 pour venir en appui glissant contre les rampes de cuve 10 lors de la mise en rotation relative du couvercle 4 à l'intérieur de la cuve 3 assurant ainsi le verrouillage.

Grâce à ces caractéristiques on réalise ainsi un mécanisme de verrouillage à baïonnettes assurant une liaison résistante cuve/couvercle, les rampes de cuve 10 et les rampes de couvercle 11 étant ménagées à distance des limites supérieures respectives de la cuve 3 et du couvercle 4 de manière à ménager une zone circulaire ou interface dépourvue totalement de rampes 10, 11 permettant ainsi la mise en place du couvercle 4 à l'intérieur de la cuve 3 et le positionnement des rampes de cuve 10 et des rampes de couvercle 11 à un niveau inférieur à ladite zone circulaire ou interface. De manière générale, le couvercle 4 peut ainsi être un couvercle présentant une portion rentrante, tel qu'illustré ou un couvercle coiffant la cuve (non illustré).

Cette disposition permet de faciliter la fermeture et le verrouillage de l'appareil car l'opération de mise en place, d'introduction du couvercle 4 au sein même de la cuve 3 puis de mise en rotation, par exemple dans le sens horaire, du couvercle 4 et enfin de verrouillage sont des séquences d'opérations que l'utilisateur peut réaliser avec une appréhension visuelle directe en appréciant notamment directement les positions respectives des rampes de cuve 10 et rampes de couvercle 11. Dans les systèmes à baïonnettes classiques, l'utilisateur réalise l'accostage du couvercle sur la cuve « *en aveugle* » car la position débordante du couvercle masque totalement la cuve.

Selon la variante de réalisation illustrée aux figures, l'appareil de cuisson 1 présente un bord extérieur d'appui 12 qui se poursuit par une portion rentrante 13 formant la ceinture cylindrique, ladite portion rentrante 13 étant de dimension ajustée mais inférieure à celle de la cuve 3 afin de pouvoir être introduite dans la cuve de sorte que la portion rentrante 13 vienne en contact ajusté lors de la mise en place du couvercle 4 avec la paroi 7 de la cuve, et en particulier avec sa surface intérieure.

Selon une variante alternative de construction, non représentée aux figures, l'appareil de cuisson 1 peut présenter un bord extérieur d'appui 12 qui se poursuit par une portion coiffant l'extérieur de la cuve 3 et formant la ceinture cylindrique, ladite portion coiffant l'extérieur de la cuve 3 étant de dimension ajustée mais supérieure à celle de la cuve 3 afin de pouvoir coiffer l'extérieur de la cuve 3 de sorte que la portion coiffant l'extérieur de la cuve vienne en contact ajusté avec l'extérieur de la paroi 7 lors de la mise en place du couvercle 4.

Selon cette variante alternative, les rampes de couvercle 11 s'étendent sensiblement radialement à partir de la périphérie de la portion rentrante 13 vers l'intérieur de l'appareil 1 et les rampes de cuve 10 s'étendent sensiblement radialement à partir de la périphérie de paroi 7 de cuve vers l'extérieur de l'appareil 1.

De manière classique, les rampes de cuve 10 et les rampes de couvercle 11 se présentent sous la forme de pièces métalliques parallélépipédiques qui sont longilignes et de faibles largeur et épaisseur, c'est à dire généralement plus longues que larges et épaisses.

De manière particulièrement avantageuse, et tel qu'illustré sur la variante montrée aux figures, les rampes de couvercle 11 s'étendent sensiblement radialement à partir de la périphérie de la portion rentrante 13 vers l'extérieur de l'appareil. On réalise ainsi de rampes de cuve 10 dont la largeur se dirige selon une direction centripète vers le centre de l'appareil alors que la largeur des rampes de couvercle 11 se dirige selon une direction centrifuge tendant ainsi à s'éloigner du centre de l'appareil ou de l'axe de révolution X X' de l'appareil.

La largeur des rampes de cuve 10 et les rampes de couvercle 11 peut par exemple être de l'ordre de 5 mm et comprise entre 2 mm et 10 mm.

Tel qu'illustré aux figures, les rampes de cuve 10 et les rampes de couvercle 11 sont sensiblement rectilignes et présentent une inclinaison angulaire alpha (a) par rapport au plan d'extension P du fond 6 de cuve 3 de sorte à permettre une mise en compression du couvercle 4 sur la cuve 3 lors de la rotation relative du couvercle 4 sur la cuve 3.

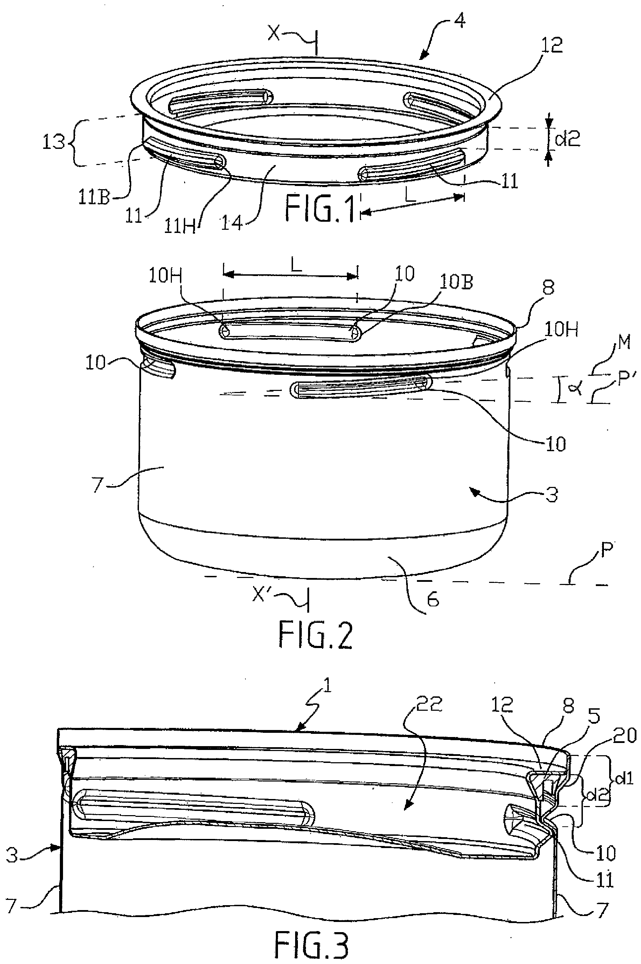

Cette disposition permet ainsi une mise en compression progressive du couvercle 4 qui se rapproche ainsi progressivement du fond 6 lors de sa rotation en raison de l'inclinaison angulaire alpha (a) des rampes de cuve 10 et des rampes de couvercle 11. Tel qu'illustré à titre schématique sur la figure 2, l'inclinaison angulaire alpha (a) correspond à l'angle alpha (α) formé par le plan médian et longitudinal M des rampes de cuve 10 ou rampes de couvercle 11 avec le plan d'extension P du fond 6 de cuve ou un plan parallèle P'. L'inclinaison angulaire alpha (a) des rampes de cuve 10 et des rampes de couvercle 11 est sensiblement identique pour toutes les rampes de cuve 10 et les rampes de couvercle 11.

L'inclinaison angulaire alpha (a) permet ainsi de définir pour chaque rampe de cuve 10 ou rampe de couvercle 11 une extrémité haute 10H ou 11H plus éloignée du fond 6 que les extrémités basses 10B ou 11B de chaque rampe de cuve 10 ou rampe de couvercle 11.

A titre de variante alternative (non représentée aux figures), il est possible de prévoir de réaliser des rampes de cuve 10 et des rampes de couvercle 11 qui s'étendent horizontalement en considération du fond 6 de cuve. Cette variante nécessite l'utilisation d'un joint d'étanchéité doté de lèvres très souples et offre la possibilité de fermer et d'ouvrir le couvercle 4 sur la cuve 3 indifféremment selon le sens horaire ou le sens antihoraire.

De préférence, les rampes de cuve 10 et les rampes de couvercle 11 s'étendent selon une longueur L sensiblement identique. La longueur L des rampes de cuve 10 et les rampes de couvercle 11 dépend du diamètre de la cuve 3 et du couvercle 4. A titre indicatif, sur la base d'une réalisation de quatre rampes de cuve 10 et de quatre rampes de couvercle 11 et d'un diamètre interne de cuve de 245 mm, la longueur L sera de l'ordre de 90 mm environ. Grâce à ces caractéristiques de conformations et de dimensions, la collaboration entre les rampes de cuve 10 et les rampes de couvercle 11 est optimale.

S'agissant d'un autocuiseur, les rampes de cuve 10 et les rampes de couvercle 11 seront conformées et dimensionnées de manière à exercer une résistance suffisante et nécessaire pour répondre aux normes et aux spécifications qui régissent ce type d'appareil. En particulier, et à titre purement informatif, les rampes de cuve 10 et les rampes de couvercle 11 seront dimensionnées de manière à pouvoir réaliser une liaison étanche et résistante lors du verrouillage pouvant résister à une pression d'épreuve de 500 kPa sans séparation de la cuve 3 et du couvercle 4.

De la même façon, pour éviter les déformations radiales de la cuve 3, les dimensions respectives du couvercle 4 et de la cuve 3 seront ajustées pour limiter le jeu sur toutes leurs périphéries circulaires respectives. On évitera ainsi tout déplacement radial dans le but de conserver une circularité optimale.

De manière préférentielle, les rampes de cuve 10 et les rampes de couvercle 11 présentent une inclinaison angulaire alpha (a) par rapport au plan d'extension P du fond 6 de cuve 3 de l'ordre de 3 degrés pour une réalisation telle que mentionnée précédemment avec quatre rampes et un diamètre interne de cuve de 245 mm. Tel qu'illustré aux figures, et de manière particulièrement préférentielle, les rampes de cuve 10 et les rampes de couvercle 11 sont réparties régulièrement et équidistantes les unes des autres à la surface de la paroi 7 de cuve 3 et de la portion rentrante 13. De cette façon, on évite des déformations de la cuve 3 et du couvercle 4. Par ailleurs, pour obtenir une zone de déformation préférentielle du couvercle, et donc assurer une fuite à un certain niveau de pression, un aménagement des longueurs des rampes peut permettre d'obtenir un tel déséquilibre sécuritaire. D'autre part pour autoriser l'accostage du couvercle sur la cuve, dans une position préférentielle et unique, l'aménagement des longueurs des rampes peut également permettre de l'obtenir.

Avantageusement, l'appareil conforme à l'invention comporte au moins une paire de rampes de cuve 10 et une paire de rampes de couvercle 11, et de préférence deux paires tel qu'illustré sur les figures.

Selon l'invention, les rampes de cuve 10 et les rampes de couvercle 11 sont obtenues par déformation de la matière constitutive, respectivement de la paroi 7 de cuve 3 et de la ceinture périphérique 14.

De cette façon, on obtient des rampes de cuve 10 et des rampes de couvercle 11 qui forment des cavités allongées dont la concavité est orientée vers l'intérieur de l'appareil pour les rampes de couvercle 11 et vers l'extérieur de l'appareil pour les rampes de cuve 10.

Tel qu'illustré en particulier à la figure 3, la surface extérieure du couvercle 4 est délimitée par un bord extérieur d'appui 12 formant une collerette et la cuve 3 comporte un bord d'appui périphérique 20 destiné à servir d'appui pour ledit bord extérieur d'appui 12 lors de la mise en place du couvercle 4.

Selon une version particulièrement intéressante de l'invention et tel qu'illustré à la figure 3 en particulier, le bord extérieur d'appui 12 surplombe la portion rentrante 13 et assure la jonction avec ladite portion rentrante 13 en formant un logement, de préférence périphérique, destiné à recevoir le moyen d'étanchéité 5 lequel est destiné à venir en appui direct avec le bord d'appui périphérique 20 de la cuve 3.

Le logement ainsi réalisé présente une section transversale sensiblement en L s'étendant sur toute la périphérie du couvercle 4 et permet de recevoir le moyen d'étanchéité 5 dont la déformation permettra d'assurer l'étanchéité de l'enceinte de cuisson. Tel qu'illustré, le moyen d'étanchéité 5 est par exemple formé par un joint élastomère de section transversale en U dont l'une des lèvres vient en appui direct avec le bord d'appui périphérique 20.

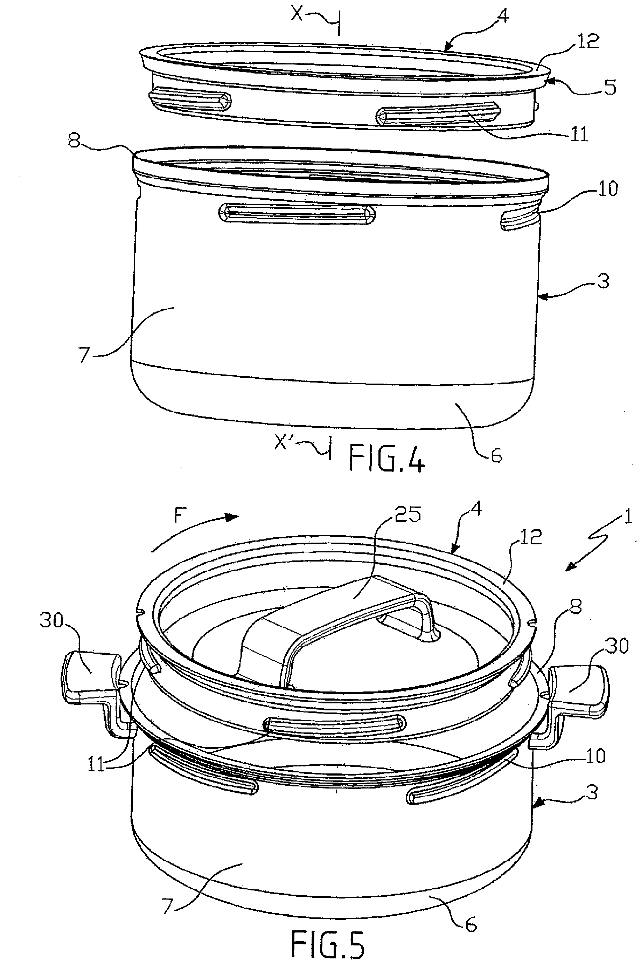

Tel qu'illustré, et de manière préférentielle, le bord supérieur 8 de la cuve 3 se poursuit par une zone sensiblement verticale se poursuivant elle-même par un flanc incliné en direction du centre de l'appareil formant le bord d'appui périphérique 20 contre lequel l'une des lèvres du moyen d'étanchéité 5 vient se comprimer. Tel qu'illustré, le bord supérieur 8 peut être formé par un plat circulaire sensiblement horizontal (figures 5 à 7) ou par un plat circulaire sensiblement vertical (figures 2 à 4) sans pour autant sortir du cadre de l'invention.

Tel qu'illustré et de manière avantageuse, le couvercle 4 comporte dans sa partie centrale une cavité 22 formant la partie extérieure de la portion rentrante 13, la cavité centrale 22 présentant une zone centrale bombée 23 entourée d'une zone annulaire 24 sensiblement plane, la zone bombée 23 présentant une concavité régulière tournée vers l'extérieur de l'appareil. Avantageusement, le couvercle comporte un moyen de manipulation 25, par exemple une poignée en U reliée à la partie centrale bombée 23.

La cuve 3 de l'appareil de cuisson sous pression conforme à l'invention est également pourvue d'au moins une et de préférence deux poignées 30 fixées sur la face extérieure de la paroi 7, de préférence en position diamétralement opposée. Les poignées 30 permettent le transport de l'appareil tout en facilitant le versement du liquide contenu dans la cuve 3. Les poignées 30 peuvent également être utilisées pour servir de moyen visuel d'indexation de la position relative du couvercle 4 en regard de la cuve 3 et servent également de point d'appui à la main de l'utilisateur pour faciliter la rotation du couvercle selon la flèche F en évitant l'anti rotation de la cuve 3 lors du verrouillage.

Le mode de fonctionnement de l'appareil de cuisson conforme à l'invention est le suivant.

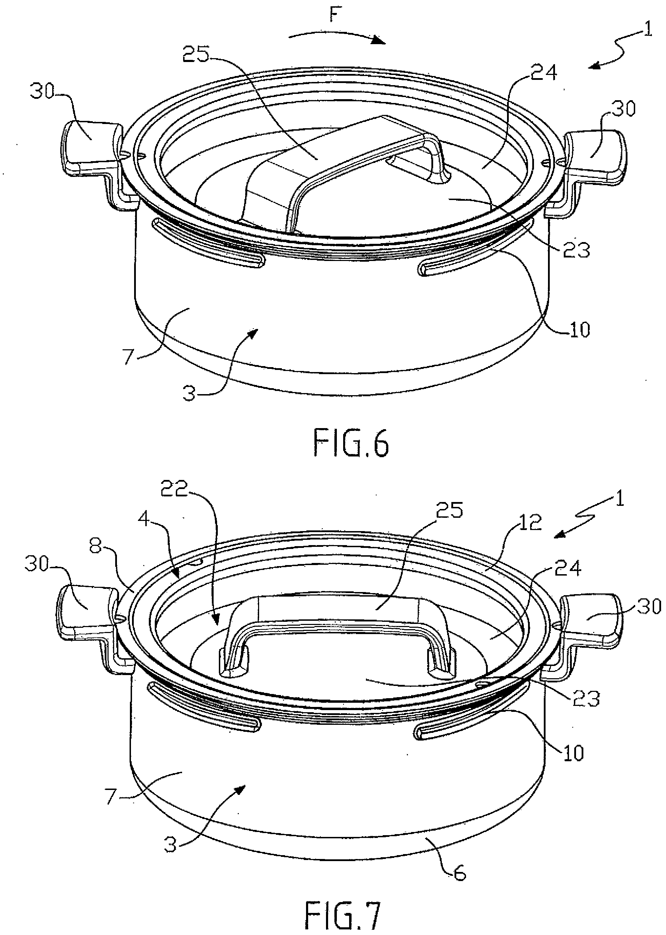

Pour réaliser le verrouillage du couvercle 4 dans la cuve 3, l'utilisateur saisit tout d'abord le couvercle 4 par l'intermédiaire de l'organe de manipulation 25 et prépare l'accostage du couvercle 4 sur la cuve 3 (figure 5). Pour cela, l'utilisateur vient faire reposer le bord extérieur d'appui 12 contre le bord d'appui périphérique 20 par l'intermédiaire du moyen d'étanchéité 5 (figure 6).

L'utilisateur assure ensuite la rotation du couvercle 4, par exemple selon la flèche F dans le sens horaire, jusqu'à ressentir une résistance ou un déclic sonore indiquant que la collaboration ou coopération entre les rampes de cuve 10 et les rampes de couvercle 11 est optimale. Cette position correspond à la liaison étanche et résistante recherchée (Figure 7). Lors de la rotation progressive du couvercle 4, ce dernier est progressivement conduit à se déplacer vers le bas en direction du fond 6 grâce à l'inclinaison alpha a des rampes de cuve 11 et de couvercle 10 ce qui comprime progressivement le moyen d'étanchéité 5 pour assurer l'étanchéité entre la cuve 3 et le couvercle 4. Dans cette position, l'appareil peut alors monter en pression.

Tel qu'illustré, l'appareil de cuisson sous pression est constitué par un autocuiseur, de préférence à usage domestique.

L'invention concerne également une méthode de fabrication de moyens de verrouillage disposés sur la cuve et le couvercle d'un appareil de cuisson d'aliments sous pression, lesdits moyens de verrouillage formant des rampes de cuve 10 et des rampes de couvercle 11 qui sont destinées à coopérer ensemble par mise en rotation relative de la cuve 3 et du couvercle 4 pour que les rampes de couvercle 11 viennent sous les rampes de cuve 10 afin d'assurer le verrouillage du couvercle 4 sur la cuve 3.

Selon l'invention, les rampes de cuve 10 et les rampes de couvercle 11 sont réalisées en sur-épaisseur à partir de la paroi 7 de la cuve et/ou de l'enveloppe du couvercle par ajout de matière ou déformation de matière.

Les rampes de cuve et de couvercle peuvent donc être réalisées soit par assemblage en rapportant de la matière, soit par simple déformation de la matière constitutive de la cuve ou du couvercle pour réaliser les rampes.

Selon une version particulièrement avantageuse de l'invention, les rampes de cuve et les rampes de couvercle sont réalisées en rapportant, par ajout de matière, les rampes de cuve à l'intérieur ou à l'extérieur de la cuve et/ou les rampes de couvercle à l'extérieur ou à l'intérieur (couvercle coiffant) de l'enveloppe du couvercle par rivetage, par soudure, par collage ou par clinchage.

Selon une autre variante de réalisation de la méthode de fabrication conforme à l'invention, les rampes de cuve sont réalisées par déformation de l'intérieur ou de l'extérieur de la cuve et les rampes de couvercle par déformation de l'extérieur ou de l'intérieur de l'enveloppe du couvercle par hydroformage ou magnétoformage ou emboutissage.

La réalisation d'un mécanisme de verrouillage conforme à l'invention mettant en oeuvre un mécanisme de verrouillage à baïonnettes « *inversées* » dans lequel les rampes de cuve 10 sont situées à distance du bord supérieur 8 de cuve à l'intérieur même de la paroi 7 et les rampes de couvercle 11 sont disposées sur la portion rentrante 13 du couvercle 4 de manière à pouvoir venir se verrouiller sous les rampes de cuve 10 à l'intérieur même de la cuve 3 présente de nombreux avantages.

Il présente en particulier l'avantage de seulement mettre en oeuvre deux éléments mécaniques pour assurer la liaison résistante, de permettre d'optimiser la quantité de matière utilisée en mettant en oeuvre des épaisseurs de métal réduites sans avoir à utiliser de nombreuses pièces rapportées qui sont nécessaires dans les dispositifs de verrouillage connus de l'art antérieur tels que des étriers, des oreilles de verrouillage, des mâchoires ou des segments par exemple.

Le mécanisme de verrouillage conforme à l'invention permet également de faciliter l'ergonomie de fermeture et d'ouverture de l'appareil en raison de la simplicité de la mise en place du couvercle par l'utilisateur à l'intérieur de la cuve, l'utilisateur pouvant visualiser parfaitement l'accostage du couvercle, lequel peut se centrer facilement puisqu'il est mis en place à l'intérieur même de la cuve 3 sous son bord supérieur 8, la surface interne de la paroi 7 servant de moyen de centrage.

Le nombre réduit de pièces nécessaires pour assurer la liaison mécanique permet également d'offrir la possibilité d'équiper l'appareil avec de nombreux accessoires additionnels.

## Revendications

1. Appareil de cuisson (1) d'aliments sous pression comportant au moins :
- une cuve circulaire (3) et un couvercle circulaire (4) destiné à être rapporté en appui sur la cuve (3) pour former une enceinte de cuisson sensiblement étanche à l'aide d'un moyen d'étanchéité (5) interposé entre la cuve (3) et le couvercle (4),
- des moyens de verrouillage disposés sur la cuve (3) et le couvercle (4) et formant des rampes de cuve (10) et des rampes de couvercle (11) qui sont destinées à coopérer ensemble par mise en rotation relative de la cuve (3) et du couvercle (4) pour que les rampes de couvercle (11) viennent sous les rampes de cuve (10) afin d'assurer le verrouillage du couvercle (4) sur la cuve (3),
- la cuve (3) étant délimitée par un bord supérieur (8) à partir duquel s'étend la paroi (7) de la cuve, les rampes de cuve (10) sont disposées sous ledit bord supérieur (8) à partir d'une distance « *d1* » dudit bord supérieur (8),
- le couvercle (4) est délimité par un bord extérieur d'appui (12) se poursuivant par une ceinture cylindrique de dimension ajustée à celle de la cuve (3) afin de pouvoir venir en contact ajusté avec la paroi (7) de la cuve lors de la mise en place du couvercle (4) en appui dans ou sur la cuve (3) par son bord extérieur d'appui (12), les rampes de couvercle (11) étant disposées sur ladite ceinture cylindrique à une distance *« d2 »* du bord extérieur d'appui (12), les distances d1 et d2 étant telles qu'elles permettent de faire coopérer les rampes de cuve (10) et les rampes de couvercle (11) entre elles lors de la mise en place du couvercle (4) en appui sur la cuve (3), les rampes de couvercle (11) étant destinées à passer sous les rampes de cuve (10) pour venir en appui glissant contre les rampes de cuve (10) lors de la mise en rotation relative du couvercle (3) à l'intérieur de la cuve (3) assurant ainsi le verrouillage, ledit appareil étant **caractérisé en ce que**:
- le bord extérieur d'appui (12) se poursuit par une portion rentrante (13) formant la ceinture cylindrique, ladite portion rentrante (13) étant de dimension ajustée mais inférieure à celle de la cuve (3) afin de pouvoir être introduite dans la cuve (3) de sorte que la portion rentrante (13) vienne en contact ajusté lors de la mise en place du couvercle (4).

2. Appareil de cuisson (1) selon la revendication 1 **caractérisé en ce que** les rampes de couvercle (11) s'étendent sensiblement radialement à partir de la périphérie de la portion rentrante (13) vers l'extérieur de l'appareil (1) et les rampes de cuve (10) s'étendent sensiblement radialement à partir de la périphérie de paroi (7) de cuve vers l'intérieur de l'appareil (1).

3. Appareil de cuisson (1) selon l'une des revendications précédentes **caractérisé en ce que** les rampes de cuve (10) et les rampes de couvercle (11) sont sensiblement rectilignes et présentent une inclinaison angulaire g par rapport au plan d'extension du fond (6) de cuve de sorte à permettre une mise en compression du couvercle (4) sur la cuve (3) lors de la rotation relative du couvercle (4) sur la cuve (3).

4. Appareil de cuisson (1) selon la revendication 3 **caractérisé en ce que** les rampes de cuve (10) et les rampes de couvercle (11) s'étendent selon une longueur L sensiblement identique.

5. Appareil de cuisson (1) selon la revendication 3 ou la revendication 4 **caractérisé en ce que** les rampes de cuve (10) et les rampes de couvercle (11) présentent une inclinaison angulaire α sensiblement identique.

6. Appareil de cuisson (1) selon l'une des revendications 3 à 5 **caractérisé en ce que** les rampes de cuve (10) et les rampes de couvercle (11) présentent une inclinaison angulaire α par rapport au plan d'extension P du fond (6) de cuve de l'ordre de 3 degrés.

7. Appareil de cuisson selon l'une des revendications 1 à 4 **caractérisé en ce que** les rampes de cuve (10) et des rampes de couvercle (11) s'étendent horizontalement en considération du fond (6) de cuve.

8. Appareil de cuisson (1) selon l'une des revendications 1 à 7 **caractérisé en ce que** les rampes de cuve (10) et les rampes de couvercle (11) sont réparties régulièrement et équidistantes les unes des autres à la surface de la paroi (7) de cuve et de la portion rentrante (13).

9. Appareil (1) selon la revendication 8 **caractérisé en ce qu'**il comporte au moins une paire de rampes de cuve (10) et une paire de rampes de couvercle (11), et de préférence deux paires.

10. Appareil (1) selon l'une des revendications 1 à 9 **caractérisé en ce que** les rampes de cuve (10) et les rampes de couvercle (11) sont obtenues par déformation de la matière constitutive, respectivement, de la paroi (7) de cuve et de la ceinture périphérique.

11. Appareil (1) selon l'une des revendications précédentes **caractérisé en ce que** la surface extérieure du couvercle (4) étant délimitée par un bord extérieur d'appui (12), la cuve (3) comporte un bord d'appui périphérique (20) destiné à servir d'appui pour le bord extérieur d'appui (12) lors de la mise en place du couvercle (4).

12. Appareil (1) selon la revendication 11 lorsqu'elle dépend de l'une des revendications 1 à 2 et 3 à 10, **caractérisé en ce que** le bord extérieur d'appui (12) surplombe la portion rentrante (13) et assure la jonction avec ladite portion rentrante (13) en formant un logement destiné à recevoir le moyen d'étanchéité (5) lequel est destiné à venir en appui direct avec le bord d'appui périphérique (20) de la cuve (3).

13. Appareil (1) selon l'une des revendications précédentes **caractérisé en ce qu'**il est constitué par un autocuiseur, de préférence à usage domestique.

14. Méthode de fabrication de moyens de verrouillage disposés sur la cuve (3) et le couvercle (4) d'un appareil de cuisson (1) d'aliments sous pression, lesdites cuve (3) et couvercle (4) étant réalisés à partir d'un matériau métallique et les moyens de verrouillage formant des rampes de cuve (10) et des rampes de couvercle (11) qui sont destinées à coopérer ensemble par mise en rotation relative de la cuve (3) et du couvercle (4) pour que les rampes de couvercle (11) viennent sous les rampes de cuve (10) afin d'assurer le verrouillage du couvercle (4) sur la cuve (3), **caractérisé en ce que**:
- lesdites rampes de cuve (10) et les rampes de couvercle (11) sont réalisées en surépaisseur à partir de la paroi (7) de la cuve et/ou de l'enveloppe du couvercle (4) par ajout de matière ou déformation de matière.
- le couvercle (4) est délimité par un bord extérieur d'appui (12) se poursuivant par une ceinture cylindrique de dimension ajustée à celle de la cuve (3), le bord extérieur d'appui (12) se poursuivant par une portion rentrante (13) formant la ceinture cylindrique, ladite portion rentrante (13) étant de dimension ajustée mais inférieure à celle de la cuve (3) afin de pouvoir être introduite dans la cuve (3) de sorte que la portion rentrante (13) vienne en contact ajusté lors de la mise en place du couvercle (4).

15. Méthode de fabrication selon la revendication 14 **caractérisée en ce que** les rampes de cuve (10) et les rampes de couvercle (11) sont réalisées en rapportant, par ajout de matière, les rampes de cuve (10) à l'intérieur ou à l'extérieur de la cuve (3) et/ou les rampes de couvercle (11) à l'extérieur ou à l'intérieur de l'enveloppe du couvercle (4) par rivetage, par soudure, par collage ou par clinchage.

16. Méthode de fabrication selon la revendication 14 **caractérisée en ce que** les rampes de cuve (10) sont réalisées par déformation de l'intérieur ou de l'extérieur de la cuve (3) et les rampes de couvercle (11) par déformation de l'extérieur ou de l'intérieur de l'enveloppe du couvercle (4) par hydroformage ou magnétoformage ou emboutissage.

## Patentansprüche

1. Gerät (1) zum Garen von Nahrungsmitteln, umfassend mindestens:
- einen runden Behälter (3) und einen runden Deckel (4), der dazu bestimmt ist, in Anlage auf den Behälter (3) aufgesetzt zu werden, um einen im Wesentlichen dichten Garraum mit Hilfe eines Dichtungsmittels (5) zu bilden, das zwischen dem Behälter (3) und dem Deckel (4) angeordnet ist,
- Verriegelungsmittel, die auf dem Behälter (3) und dem Deckel (4) angeordnet sind und Behälterrampen (10) und Deckelrampen (11) bilden, die dazu bestimmt sind, miteinander durch relatives Drehen des Behälters (3) und des Deckels (4) zusammenzuwirken, damit die Deckelrampen (11) unter die Behälterrampen (10) gelangen, um die Verriegelung des Deckels (4) auf dem Behälter (3) sicherzustellen,
- wobei der Behälter (3) durch einen oberen Rand (8) begrenzt wird, von dem sich die Wand (7) des Behälters erstreckt, wobei die Behälterrampen (10) unter dem oberen Rand (8) in einem Abstand "d1" von dem oberen Rand (8) angeordnet sind,
- wobei der Deckel (4) von einem Außenanlagerand (12) begrenzt wird, der sich in einer zylindrischen Umfassung mit einer Abmessung fortsetzt, die an jene des Behälters (3) angepasst ist, um mit der Wand (7) des Behälters in eingestellten Kontakt gelangen zu können, wenn der Deckel (4) in Anlage in oder auf dem Behälter (3) durch seinen Außenanlagerand (12) platziert wird, wobei die Deckelrampen (11) auf der zylindrischen Umfassung in einem Abstand "d2" vom Außenanlagerand (12) angeordnet sind, wobei die Abstände d1 und d2 derart sind, dass sie ein Zusammenwirken der Behälterrampen (10) und der Deckelrampen (11) miteinander gestatten, wenn der Deckel (4) in Anlage auf dem Behälter (3) platziert wird, wobei die Deckelrampen (11) dazu bestimmt sind, unter die Behälterrampen (10) zu gelangen, um in gleitende Anlage gegen die Deckelrampen (10) bei der relativen Drehung des Deckels (4) im Inneren des Behälters (3) zu gelangen, wodurch die Verriegelung sichergestellt wird, wobei das Gerät **dadurch gekennzeichnet ist, dass**:
- sich der Außenanlagerand (12) in einem zurücktretenden Abschnitt (13) fortsetzt, der die zylindrische Umfassung bildet, wobei der zurücktretende Abschnitt (13) eine Abmessung aufweist, die eingestellt, jedoch kleiner als jene des Behälters (3) ist, um in den Behälter (3) derart eingesetzt werden zu können, dass der zurücktretende Abschnitt (13) in eingestellten Kontakt gelangt, wenn der Deckel (4) platziert wird.

2. Kochgerät (1) nach Anspruch 1, **dadurch gekennzeichnet, dass** sich die Deckelrampen (11) im Wesentlichen radial vom Umfang des zurücktretenden Abschnitts (13) zur Außenseite des Behälters (1) erstrecken, und sich die Behälterrampen im Wesentlichen radial vom Umfang der Wand (7) des Behälters zur Innenseite des Behälters (1) erstrecken.

3. Kochgerät (1) nach einem der vorhergehenden Ansprüche, **dadurch gekennzeichnet, dass** die Behälterrampen (10) und die Deckelrampen (11) im Wesentlichen rechteckig sind und eine Winkelneigung α in Bezug auf die Ausdehnungsebene des Bodens (6) des Behälters aufweisen, um ein Komprimieren des Deckels (4) auf dem Behälter (3) bei der relativen Drehung des Deckels (4) auf dem Behälter (3) zu gestatten.

4. Kochgerät (1) nach Anspruch 3, **dadurch gekennzeichnet, dass** sich die Behälterrampen (10) und die Deckelrampen (11) entlang einer im Wesentlichen identischen Länge L erstrecken.

5. Kochgerät (1) nach Anspruch 3 oder Anspruch 4, **dadurch gekennzeichnet, dass** die Behälterrampen (10) und die Deckelrampen (11) eine im Wesentlichen identische Winkelneigung α aufweisen.

6. Kochgerät (1) nach einem der Ansprüche 3 bis 5, **dadurch gekennzeichnet, dass** die Behälterrampen (10) und die Deckelrampen (11) eine Winkelneigung α in Bezug auf die Ausdehnungsebene P des Bodens (6) des Behälters in der Größenordnung von 3 Grad aufweisen.

7. Kochgerät nach einem der Ansprüche 1 bis 4, **dadurch gekennzeichnet, dass** sich die Behälterrampen (10) und die Deckelrampen (11) horizontal in Bezug auf den Boden (6) des Behälters erstrecken.

8. Kochgerät (1) nach einem der Ansprüche 1 bis 7, **dadurch gekennzeichnet, dass** die Behälterrampen (10) und die Behälterrampen (11) regelmäßig und in demselben Abstand voneinander auf der Fläche der Wand (7) des Behälters und des zurücktretenden Abschnitts (13) verteilt sind.

9. Gerät (1) nach Anspruch 8, **dadurch gekennzeichnet, dass** dieses mindestens ein Paar von Behälterrampen (10) und ein Paar von Deckelrampen (11), und vorzugsweise zwei Paare, umfasst.

10. Gerät (1) nach einem der Ansprüche 1 bis 9, **dadurch gekennzeichnet, dass** die Behälterrampen (10) und die Deckelrampen (11) durch Verformen des Materials erhalten werden, das jeweils die Wand (7) des Behälters und die Umfangsumfassung bildet.

11. Gerät (1) nach einem der vorhergehenden Ansprüche, **dadurch gekennzeichnet, dass**, da die Außenfläche des Deckels (4) durch einen Außenanlagerand (12) begrenzt wird, der Behälter (3) einen Umfangsanlagerand (20) umfasst, der dazu bestimmt ist, als Anlage für den Außenanlagerand (12) bei der Platzierung des Deckels (4) zu dienen.

12. Gerät (1) nach Anspruch 11, wenn von einem der Ansprüche 1 bis 2 und 3 bis 10 abhängig, **dadurch gekennzeichnet, dass** der Außenanlagerand (12) über den zurücktretenden Abschnitt (13) hinausragt und die Verbindung mit dem zurücktretenden Abschnitt (13) sicherstellt, indem eine Aufnahme gebildet wird, die dazu bestimmt ist, das Dichtungsmittel (5) aufzunehmen, das dazu bestimmt ist, in direkte Anlage mit dem Außenumfangsrand (20) des Behälters (3) zu gelangen.

13. Gerät (1) nach einem der vorhergehenden Ansprüche, **dadurch gekennzeichnet, dass** dieses aus einem Druckkochgerät, vorzugsweise für den Haushaltsgebrauch, besteht.

14. Verfahren zur Herstellung von Verriegelungsmitteln, die auf dem Behälter (3) und dem Deckel (4) eines Geräts (1) zum Garen von Nahrungsmitteln unter Druck angeordnet sind, wobei der Behälter (3) und der Deckel (4) aus einem metallischen Material hergestellt sind, und die Verriegelungsmittel Behälterrampen (10) und Deckelrampen (11) bilden, die dazu bestimmt sind, miteinander durch relatives Drehen des Behälters (3) und des Deckels (4) zusammenzuwirken, damit die Deckelrampen (11) unter die Behälterrampen (10) gelangen, um die Verriegelung des Deckels (4) auf dem Behälter (3) sicherzustellen, **dadurch gekennzeichnet, dass**:
- die Behälterrampen (10) und die Deckelrampen (11) verdickt von der Wand (7) des Behälters und/oder der Hülle des Deckels (4) hergestellt sind, indem Material hinzugefügt wird oder das Material verformt wird,
- der Deckel (4) von einem Außenanlagerand (12) begrenzt wird, der sich in einer zylindrischen Umfassung mit einer Abmessung fortsetzt, die an jene des Behälters (3) angepasst ist, wobei sich der Außenanlagerand (12) in einem zurücktretenden Abschnitt (13) fortsetzt, der die zylindrische Umfassung bildet, wobei der zurücktretende Abschnitt (13) eine Abmessung aufweist, die eingestellt, jedoch kleiner als jene des Behälters (3) ist, um in den Behälter (3) derart eingesetzt werden zu können, dass der zurücktretende Abschnitt (13) in eingestellten Kontakt gelangt, wenn der Deckel (4) platziert wird.

15. Verfahren zur Herstellung nach Anspruch 14, **dadurch gekennzeichnet, dass** die Behälterrampen (10) und die Deckelrampen (11) hergestellt werden, indem, durch das Hinzufügen von Material, die Behälterrampen (10) auf der Innenseite oder auf der Außenseite des Behälters (3) und/oder die Deckelrampen (11) auf der Außenseite oder auf der Innenseite der Hülle des Deckels (4) durch Nieten, durch Schweißen, durch Kleben oder durch Klemmen angebracht werden.

16. Verfahren zur Herstellung nach Anspruch 14, **dadurch gekennzeichnet, dass** die Behälterrampen (10) durch Verformen der Innenseite oder der Außenseite des Behälters (3) und die Deckelrampen (11) durch Verformen der Außenseite oder der Innenseite der Hülle des Deckels (4) durch Hydroformen oder Magnetformen oder Tiefziehen hergestellt werden.

## Claims

1. A cooking appliance (1) for cooking food under pressure, the appliance comprising at least:
- a circular vessel (3) and a circular lid (4) for placing to bear on the vessel (3) in order to form a cooking enclosure that is made substantially leaktight with the help of sealing means (5) interposed between the vessel (3) and the lid (4),
- locking means arranged on the vessel (3) and the lid (4) and forming vessel ramps (10) and lid ramps (11) that are for co-operating together by the vessel (3) and the lid (4) turning relative to each other so that the lid ramps (11) come under the vessel ramps (10) in order to lock the lid (4) on the vessel (3),
- the vessel (3) being defined by a top edge (8) from which there extends the wall (7) of the vessel, and the vessel ramps (10) are arranged under said top edge (8) starting from a distance "d1" from said top edge (8),
- the lid (4) is defined by an outer bearing edge (12) followed by a cylindrical belt of size matching the size of the vessel (3) so as to be capable of coming into fitted contact with the wall (7) of the vessel when the lid (4) is put into place bearing in or on the vessel (3) via its outer bearing edge (12), the lid ramps (11) being arranged on said cylindrical belt at a distance "d2" from the outer bearing edge (12), the distances d1 and d2 being such as to enable the vessel ramps (10) and the lid ramps (11) to co-operate together when the lid (4) is put into place bearing against the vessel (3), the lid ramps (11) being for passing under the vessel ramps (10) in order to bear in sliding manner against the vessel ramps (10) when the lid (4) is caused to turn relative to the vessel (3) inside the vessel so as to ensure locking, said appliance being **characterized in that**:
- the outer bearing edge (12) is continued by a reentrant portion (13) forming the cylindrical belt, said reentrant portion (13) being of a size that matches the size of the vessel (3), but smaller, so as to be capable of being inserted inside the vessel (3) so that the reentrant portion (13) comes into fitted contact when the lid (4) is put into place.

2. A cooking appliance (1) according to claim 1, **characterized in that** the lid ramps (11) extend substantially radially from the periphery of the reentrant portion (13) towards the outside of the appliance (1) and the vessel ramps (10) extend substantially radially from the periphery of the wall (7) of the vessel towards the inside of the appliance (1).

3. A cooking appliance (1) according to any preceding claim, **characterized in that** the vessel ramps (10) and the lid ramps (11) are substantially rectilinear and present an angle of inclination α relative to the plane in which the bottom (6) of the vessel extends so as to enable the lid (4) to be put into compression against the vessel (3) during relative turning of the lid (4) on the vessel (3).

4. A cooking appliance (1) according to claim 3, **characterized in that** the vessel ramps (10) and the lid ramps (11) are of substantially identical length L.

5. A cooking appliance (1) according to claim 3 or claim 4, **characterized in that** vessel ramps (10) and the lid ramps (11) present an angle of inclination α that is substantially identical.

6. A cooking appliance (1) according to any one of claims 3 to 5, **characterized in that** the vessel ramps (10) and the lid ramps (11) present an angle of inclination α relative to the plane P in which the bottom (6) of the vessel extends that is of the order of 3°.

7. A cooking appliance (1) according to any one of claims 1 to 4, **characterized in that** the vessel ramps (10) and the lid ramps (11) extend horizontally, considering the bottom (6) of the vessel to be horizontal.

8. A cooking appliance (1) according to any one of claims 1 to 7, **characterized in that** the vessel ramps (10) and the lid ramps (11) are distributed regularly and at equal distances from one another onto the surface of the wall (7) of the vessel and of the reentrant portion (13).

9. A cooking appliance (1) according to claim 8, **characterized in that** it includes at least one pair of vessel ramps (10) and at least one pair of lid ramps (11), and preferably two pairs.

10. A cooking appliance (1) according to any one of claims 1 to 9, **characterized in that** the vessel ramps (10) and the lid ramps (11) are obtained by deforming the material constituting respectively the vessel wall (7) and the peripheral belt.

11. An appliance (1) according to any preceding claim, **characterized in that** the outside surface of the lid (4) is defined by an outer bearing edge (12) and the vessel (3) includes a peripheral bearing edge (20) for having the outer bearing edge (12) bearing thereagainst when the lid (4) is put into place.

12. An appliance (1) according to claim 11 as dependent on any one of claims 1 to 2 and 3 to 10, the appliance being **characterized in that** the outer bearing edge (12) overlies the reentrant portion (13) and provides the junction with said reentrant portion (13) by forming a housing for receiving the sealing means (5) that is to bear directly against the peripheral bearing edge (20) of the vessel (3).

13. An appliance (1) according to any preceding claim, **characterized in that** it is constituted by a pressure cooker, preferably for home use.

14. A fabrication method for fabricating locking means arranged on the vessel (3) and the lid (4) of a cooking appliance (1) for cooking food under pressure, said vessel (3) and lid (4) being made of metal and locking means forming vessel ramps (10) and lid ramps (11) that are for co-operating together by relative turning between the vessel (3) and the lid (4) so that the lid ramps (11) come under the vessel ramps (10) so as to lock the lid (4) on the vessel (3), the method being **characterized in that**:
- said vessel ramps (10) and the lid ramps (11) are made as extra thicknesses from the wall (7) of the vessel and/or from the perimeter of the lid (4) by adding material or by deforming material,
- the outer bearing edge (12) is continued by a reentrant portion (13) forming the cylindrical belt, said reentrant portion (13) being of a size that matches the size of the vessel (3), but smaller, so as to be capable of being inserted inside the vessel (3) so that the reentrant portion (13) comes into fitted contact when the lid (4) is put into place.

15. A fabrication method according to claim 14, **characterized in that** the vessel ramps (10) and the lid ramps (11) are made by fitting the vessel ramps (10) inside or outside the vessel (3) and/or the lid ramps (11) outside or inside the perimeter of the lid (4) by adding material that is secured by riveting, by welding, or adhesive, or by clinching.

16. A fabrication method according to claim 14, **characterized in that** the vessel ramps (10) are made by inwardly or outwardly deforming the vessel (3) and the lid ramps (11) are made by outwardly or inwardly deforming the perimeter of the lid (4) by hydroforming or by magnetoforming or by pressing.
